# EUROPÄISCHE PATENTSCHRIFT

(11) **EP 3 168 037 B1**
(45) Veröffentlichungstag und Bekanntmachung des Hinweises auf die Patenterteilung: **31.05.2023**
(21) Anmeldenummer: 16178783.3
(22) Anmeldetag: 11.07.2016
(51) Int. Cl.: B09B 3/00, A01F 15/10, B65F 9/00, B65B 11/00, B65B 63/02, B30B 9/30, B09B 3/20

(54) **PRESSEINHEIT UND FAHRZEUG MIT EINER PRESSEINHEIT**
PRESS UNIT AND VEHICLE WITH A PRESS UNIT
UNITE DE PRESSE ET VEHICULE COMPRENANT UNE UNITE DE PRESSE

(30) Priorität: 19.10.2015 DE 102015220339
(43) Veröffentlichungstag der Anmeldung: 17.05.2017
(73) Patentinhaber: ARES GmbH, 80999 München (DE)
(72) Erfinder: KIENLEIN, Jürgen, 84032 Altdorf (DE); KLOTZ, Felix, 85376 Massenhausen (DE); SACK, Bernhard, 81241 München (DE)
(74) Vertreter: Hofstetter, Schurack & Partner

(56) Entgegenhaltungen:
- DE-A1- 3 633 219
- DE-U1- 29 802 541
- JP-A- H05 269 598
- JP-A- H10 323 798
- JP-A- H11 123 369
- JP-A- 2001 347 251
- JP-A- 2008 030 946
- JP-A- 2009 189 922
- JP-A- 2009 281 109
- JP-A- 2010 201 311
- JP-U- H0 743 605

## Beschreibung

Die vorliegende Erfindung betrifft ein Fahrzeug mit einer Presseinheit zum Verpressen von Abfallmaterial, insbesondere Mineralwolle, wobei die Presseinheit einen Eingabeabschnitt zur Eingabe von unverpresstem Abfallmaterial, eine Pressvorrichtung zum portionsweisen Komprimieren des eingegebenen Abfallmaterials und einen Ausgabeabschnitt zur Ausgabe des verpressten Abfallmaterials umfasst.

Das Verpressen von Abfallmaterial ist eine im Stand der Technik weitreichend bekannte Maßnahme zur Verringerung des Volumens und damit zur Verbesserung der Handhabbarkeit und Transportierbarkeit einer zu verarbeitenden Menge an Abfallmaterial. Das Verpressen erfolgt zumeist dort, wo das Abfallmaterial anfällt, z.B. auf einer Baustelle oder an einer Abfallsammelstelle. Nach dem Verpressen kann das komprimierte Material mit einem geeigneten Fahrzeug schließlich zu einer Deponie oder einer Weiterverarbeitungsstation transportiert werden. Einige Presseinheiten sind als Baueinheit transportabel und können beispielsweise auf einem Sattelschlepper transportiert werden. Solche Transporte sind jedoch aufgrund des Gewichts und der Größe der Presseinheit mit einem hohen Aufwand verbunden und erfordern insbesondere spezielle Transportfahrzeuge wie Tieflader oder Schwerlasttransporter etc.

Abfallmaterialien können gesundheitsgefährdende oder umweltgefährdende Stoffe enthalten, die einer besonderen Behandlung bei der Aufbereitung und Lagerung des Abfalls bedürfen. So ist insbesondere beim Aufbereiten und Transportieren von Mineralwolleabfällen ein Eintrag von Mineralwollefasern oder Stäuben in die Umwelt oder ein Kontakt dieser Materialien mit dem Menschen zu vermeiden. Für derartige Abfälle sind daher spezielle Verpackungsmaterialien vorgeschrieben, beispielsweise besondere reißfeste Abfallsäcke. Während des Verpressens in einer herkömmlichen Pressvorrichtung reißen solche Verpackungen jedoch regelmäßig auf und ein Austritt von Abfallmaterial oder Stäuben des Abfallmaterials kann kaum verhindert werden. Zur Überwindung dieses Problems ist zum Beispiel aus der EP 2 465 673 A2 eine Vorrichtung zur Aufbereitung von Mineralwolleabfällen bekannt, in welcher ein während des Verpressens von Mineralwolle entstehender Staub durch eine Absaugvorrichtung abgesaugt und separat entsorgt werden kann. Auch wenn auf diese Weise ein während des Verpressens entstehender Materialaustritt in gewissem Maße abgeführt werden kann, so verhindert dieses Verfahren jedoch nicht den späteren Kontakt des Abfallmaterials mit dem Menschen oder der Umwelt, insbesondere wenn das verpresste Abfallmaterial die Presseinheit verlassen hat und beispielsweise zu einer Deponie weiter transportiert wird.

Dokument JP H10 323798 A offenbart eine Presseinheit zur Volumenreduzierung von Glaswolle-Abfall welche von einem Kolben in einem Zylinder ausgeführt wird, wobei die Abfallzuführung und Komprimierung wiederholt werden. Nur während des letzten Kompressionsschrittes wird der Druck so eingestellt, dass der Abfall zu einem Pulver wird. In Anbetracht der hier vorliegenden Erfindung offenbart Dokument JP H10 323798 A eine Presseinheit zum Verpressen von Abfallmaterial, insbesondere Materialwolle, wobei die Presseinheit umfasst: einen Eingabeabschnitt, an welchem unverpresstes Abfallmaterial eingebbar ist, eine Pressvorrichtung zum Komprimieren des eingegebenen Abfallmaterials und einen Ausgabeabschnitt, an welchem das Abfallmaterial ausgebbar ist, wobei eine Hüllvorrichtung funktionsmäßig zwischen der Pressvorrichtung und dem Ausgabeabschnitt angeordnet ist, welche dafür eingerichtet ist, durch die Presseinheit behandeltes Abfallmaterial mit einer im Wesentlichen staubdichten Hülle zu umkleiden. Dokument DE 36 33 219 A1 offenbart ein Verfahren zum Aufbereiten von Futtermittelpflanzen (Aufbereitungsgut), insbesondere Halmpflanzen, insbesondere Maispflanzen, bei dem das Aufbereitungsgut nach dem Ernten zwecks Silage gepresst wird und das gepresste Aufbereitungsgut an seiner der (Luft-)Atmosphäre ausgesetzten Außenseite mit einem luftundurchlässigen Abdeckmaterial abgedeckt wird, wobei das Aufbereitungsgut zu transportfähigen Einheiten verpresst wird und wobei das Aufbereitungsgut mit einer geschlossenen Umhüllung versehen wird. Dokument DE 36 33 219 A1 offenbart ferner eine Vorrichtung zur Durchführung des vorgenannten Verfahrens, welche auch ein Fahrzeug umfassen kann. Dokument JP 2009 189922 A offenbart einen Kompakter, umfassend eine Kompressionskammer, welche eine Beschickungsöffnung zum Beschicken mit leichtem und eine geringe Dichte aufweisendem Industrieabfall sowie eine Abgabeöffnung zum Abgeben des in ein verdichtetes Produkt durch Kompression überführten Industrieabfalls umfasst. Aus der JP H07 43605 U ist ein Fahrzeug mit einer Presseinheit mit den Merkmalen des Oberbegriffs des Anspruchs 1 bekannt.

Aufgabe der vorliegenden Erfindung ist es somit, ein Fahrzeug mit einer Presseinheit zum Verpressen von Abfallmaterial, insbesondere Mineralwolle, bereitzustellen, welche einen Eintrag von Abfallmaterial in die Umgebung und eine Kontaktierung von Abfallmaterial mit dem Menschen wirkungsvoll reduziert. Ferner ist es Aufgabe der vorliegenden Erfindung, eine mobile und kompakte Presseinheit bereitzustellen, welche wirtschaftlich arbeitet und einfach zu bedienen ist.

Mindestens eine der oben genannten Aufgaben wird durch das Fahrzeug gemäß den Merkmalen des Anspruchs 1 gelöst. Bevorzugte Ausführungsformen der Erfindung werden in den Unteransprüchen beschrieben.

Gemäß einem ersten Aspekt der vorliegenden Erfindung werden diese Aufgaben gelöst durch ein Fahrzeug mit einer Presseinheit zum Verpressen von Abfallmaterial, wobei die Presseinheit umfasst: einen Eingabeabschnitt, an welchem unverpresstes Abfallmaterial eingebbar ist, eine Pressvorrichtung zum portionsweisen Komprimieren des eingegebenen Abfallmaterials in einzelne Ballen und einen Ausgabeabschnitt, an welchem die Ballen ausgebbar sind, wobei in der Presseinheit eine funktionsmäßig zwischen der Pressvorrichtung und dem Ausgabeabschnitt angeordnete Hüllvorrichtung vorgesehen ist, welche dafür eingerichtet ist, mindestens einen von der Pressvorrichtung ausgegebenen Ballen mit einer im Wesentlichen staubdichten Hülle zu umkleiden. Gemäß einem wichtigen Merkmal der vorliegenden Erfindung ist somit eine Hüllvorrichtung, welche mindestens einen gepressten Ballen in einer Hülle verpackt und somit einen Austritt von Abfallmaterial in die Umgebung verhindert, zwischen der Pressvorrichtung und dem Ausgabeabschnitt angeordnet, d.h. in die Presseinheit integriert. Somit wird das verpresste Material vor der Ausgabe aus der Presseinheit und somit vor der Übergabe an ein weiteres Transportgerät, einen Kran oder eine Bedienperson, im Wesentlichen staubdicht verpackt. Die so eingehüllten Ballen lassen sich nicht nur einfach handhaben und transportieren, sondern verhindern gleichzeitig wirkungsvoll eine Umweltgefährdung oder Gesundheitsgefährdung durch das Abfallmaterial.

Die Presseinheit als Teil eines Fahrzeugs ausgestaltet Dieses Fahrzeug ist vorzugsweise ein Straßenfahrzeug, wie etwa ein Sattelauflieger für ein Zugfahrzeug oder ein Lastkraftwagen, kann jedoch alternativ als Schienenfahrzeug ausgestaltet sein. Das Fahrzeug weist zudem ein in Fahrzeuglängsrichtung verlaufendes, tragendes Karosserieelement auf, vorzugsweise ein Karosserieelement, welches mindestens eine Achse des Fahrzeugs mit einem Kopplungsabschnitt für ein Zugfahrzeug oder mit einer vorderen Achse des Fahrzeugs tragend verbindet, wobei dieses Karosserieelement gleichzeitig ein Presslast aufnehmendes Basisteil der Pressvorrichtung oder/und ein die Vorrichtungen der Presseinheit zu einer Baueinheit verbindendes Trägerteil der Presseinheit ausbildet. Mechanisch und statisch wichtige und somit schwere und aufwendig herzustellende Bauteile können auf diese Weise gleichzeitig sowohl von dem Fahrzeug als auch von der Presseinheit verwendet werden, sodass ein synergistischer Effekt gegenüber einer bloßen Anordnung einer transportablen Presseinheit auf einem herkömmlichen Fahrzeug erreicht wird Insbesondere trägt die mit dieser Maßnahme eingehergehende Gewichtsreduzierung vorteilhaft mit dazu bei, das Gesamtgewicht des Fahrzeugs auf einen Wert von kleiner oder gleich 40 Tonnen zu bringen.

Besonders bevorzugt ist das Fahrzeug derart konstruiert, dass es ein Gesamtgewicht von 40 Tonnen nicht überschreitet. Ist das Fahrzeug zur gemeinsamen Bewegung mit einem zweiten Fahrzeug in einem Fahrzeugzug eingerichtet, ist zum Beispiel das Fahrzeug ein Sattelauflieger oder ein Anhänger, welcher an ein an sich bekanntes, geeignetes Zugfahrzeug anzukoppeln ist, so beträgt vorzugsweise das Gesamtgewicht aus Fahrzeug und zweitem Fahrzeug (z.B. Zugfahrzeug) insgesamt 40 Tonnen oder weniger. Auf diese Weise ist das erfindungsgemäße Fahrzeug mit normaler Straßenzulassung gemäß deutscher Straßenverkehrsordnung kostengünstig und schnell zu einem gewünschten Einsatzort fahrbar, insbesondere ohne besondere Transportfahrzeuge wie Tieflader, Schwerlasttransporter etc.

Vorzugsweise weist die Hüllvorrichtung einen Folienzulauf zum Zuführen eines Folienmaterials und eine Wickeleinrichtung zum Umwickeln des mindestens einen Ballens mit dem Folienmaterial auf. Durch Umwickeln des mindestens einen Ballens mittels einer Folie, insbesondere einer Kunststofffolie, Stretchfolie usw., kann eine im Wesentlichen staubdichte Hülle mit geringem Kostenaufwand und in einem einfachen Arbeitsschritt hergestellt werden. Dabei ist die Hüllvorrichtung vorzugsweise dafür eingerichtet, den mindestens einen Ballen im Wesentlichen allseitig und vollständig mit der Hülle zu umkleiden, so dass jeglicher Materialaustritt aus der Hülle zuverlässig verhindert ist und auch für besonders gesundheitsgefährdende oder umweltgefährdende Abfallmaterialien eine ausreichend sichere und komfortable Handhabung der verpressten Ballen ermöglicht wird.

Funktionsmäßig zwischen der Pressvorrichtung und der Hüllvorrichtung kann ferner eine Transporteinrichtung angeordnet sein, welche dafür eingerichtet ist, mindestens einen Ballen in einer Richtung von der Pressvorrichtung zur Hüllvorrichtung zu transportieren. Dies ermöglicht insbesondere eine automatisierte Übergabe des mindestens einen Ballens von der Pressvorrichtung in die Hüllvorrichtung, so dass ein Eingriff des Menschen oder eine externe Transportvorrichtung, durch welche wiederum die Gefahr einer Kontaminierung der Umgebung durch das Abfallmaterial entstehen würde, vollständig vermieden werden kann.

In einer weiteren bevorzugten Ausführungsform der vorliegenden Erfindung ist funktionsmäßig zwischen der Pressvorrichtung und der Hüllvorrichtung eine Abbindevorrichtung angeordnet, welche beispielsweise Teil der oben genannten Transportvorrichtung sein kann oder eine solche Transportvorrichtung aufweisen kann. Eine Abbindevorrichtung dieses Ausführungsbeispiels kann dafür eingerichtet sein, eine Mehrzahl von komprimierten Ballen zusammenzufassen und der Hüllvorrichtung als Ballenpaket zuzuführen, wobei die Hüllvorrichtung dann dafür eingerichtet sein kann, alle Ballen eines Ballenpakets mit einer gemeinsamen Hülle zu umkleiden. Durch die Zusammenfassung mehrerer verpresster Ballen zu einem Ballenpaket und das Umschließen des gesamten Ballenpakets mit einer gemeinsamen Hülle kann die Effektivität der Vorrichtung sowie des nachfolgenden Transportvorgangs gesteigert werden und Material für die Hülle eingespart werden. Insbesondere bei stark komprimierbarem Abfallmaterial ist die Gesamtgröße eines durch einen jeweiligen Pressvorgang komprimierten Ballens begrenzt und durch Zusammenfassung mehrerer komprimierter Ballen kann ein Ballenpaket geschaffen werden, welches eine für den nachfolgenden Transport optimierte Größe aufweist. Gewünschtenfalls können die Mehrzahl von Ballen eines Ballenpakets vor dem Umkleiden mit der Hülle durch eine Fixiervorrichtung, vorzugsweise mit einem Garn, alternativ mit einem Draht, Band, Seil oder dergleichen, aneinander fixiert werden, so dass elastische Expansionskräfte im Material zumindest teilweise von der Fixierung aufgenommen werden und der Materialbedarf für die Hülle somit reduziert werden kann.

Vorzugsweise sind die Pressvorrichtung und die Hüllvorrichtung sowie gegebenenfalls weitere Vorrichtungen der Presseinheit (z.B. Transportvorrichtung oder/und Abbindevorrichtung) in einem gemeinsamen Gehäuse untergebracht. Ein gemeinsames Gehäuse schafft einen zusätzlichen Schutz der äußeren Umgebung gegen den Austritt von Abfallmaterial während des Verpressens oder/und während der Anbringung der Hülle. Das Gehäuse kann dann eine Eingabeöffnung aufweisen, die zum Eingabeabschnitt gehört, und kann eine Ausgabeöffnung aufweisen, die zum Ausgabeabschnitt gehört, so dass das Gehäuse dann bis auf die Eingabeöffnung und die Ausgabeöffnung im Wesentlichen geschlossen ist und das Abfallmaterial erst dann das Gehäuse wieder verlässt, wenn es sicher in der staubdichten Hülle eingeschlossen ist und keine Kontaminierungsgefahr mehr besteht.

Vorzugsweise umfasst die Presseinheit ferner eine Unterdruckhaltevorrichtung, welche dafür eingerichtet ist, durch die Presseinheit erzeugten Staub abzuführen. Durch eine solche Unterdruckhaltevorrichtung, welche beispielsweise eine in der Nähe der Pressvorrichtung angeordnete Absauganordnung umfassen kann, wird eine Belastung der Umgebung durch Staub des Abfallmaterials weiter reduziert und insbesondere wird die Gefahr eines Einatmens von gesundheitsgefährdenden Stäuben durch Bedienpersonen verringert. Insbesondere in Verbindung mit dem oben genannten gemeinsamen Gehäuse der Presseinheit ist eine Unterdruckhaltevorrichtung besonders effektiv einsetzbar, wenn ein Innenraum des Gehäuses unter Unterdruck gehalten wird und abgesaugte Stäube durch einen Filter der Unterdruckhaltevorrichtung gereinigt werden. Daher verhindert die Unterdruckhaltevorrichtung selbst dann, wenn das Gehäuse nicht optimal abgedichtet ist, effektiv einen Austritt von Abfallmaterial oder Stäuben des Abfallmaterials aus dem Gehäuse in die Umgebung.

Ferner kann eine Sammelvorrichtung vorgesehen sein, welche dafür eingerichtet ist, während des Pressvorgangs oder/und des Umhüllvorgangs herausgelöste und herabfallende Materialstücke aufzufangen. Unter herausgelösten und herabfallenden Materialstücken werden dabei Teile des Abfallmaterials verstanden, welche nicht in Form eines Staubs vorliegen, sondern größere Stücke enthalten, die durch die Schwerkraft zu Boden fallen. Durch eine geeignete Fangvorrichtung, beispielsweise eine Wanne oder dergleichen, kann die Sammelvorrichtung solche Materialstücke dann auffangen und separat entsorgen bzw. dem Verarbeitungskreislauf wieder zuführen.

In einer weiteren bevorzugten Ausführungsform der Erfindung umfasst die Presseinheit ferner eine Ladevorrichtung, welche dafür eingerichtet ist, unverpresstes Abfallmaterial aufzunehmen und dem Eingabeabschnitt zuzuführen oder/und welche dafür eingerichtet ist, mindestens einen an dem Ausgabeabschnitt ausgegebenen Ballen abzuführen. Auf diese Weise ist keine externe Bedienvorrichtung, wie etwa ein zusätzlicher fahrbarer Kran oder dergleichen erforderlich und die Presseinheit kann über eine Ladevorrichtung verfügen, die speziell auf die Aufgabe zum Be- und Entladen der Presseinheit angepasst ist.

Ferner weist die Presseinheit vorzugsweise eine Energieversorgungsvorrichtung auf, welche dafür eingerichtet ist, zumindest die Pressvorrichtung und die Hüllvorrichtung mit Betriebsenergie zu versorgen. Eine solche Anordnung folgt dem Konzept, dass die Vorrichtungen der Presseinheit zu einer Baueinheit integriert sind und sich somit wichtige konstruktive und funktionelle Elemente, wie etwa die Energieversorgungsvorrichtung oder auch Trägerelemente, Gehäuseelemente usw. gemeinsam teilen können. Insbesondere versorgt vorzugsweise eine einzige Energieversorgungsvorrichtung sämtliche energieverbrauchende Vorrichtungen der Presseinheit. Dabei ist die Weitergabe von Energie in Form von elektrischer oder mechanischer Energie von einer Vorrichtung in die nächste Vorrichtung natürlich nicht ausgeschlossen, so dass die Energieversorgungsvorrichtung möglicherweise mit nur einer der Vorrichtungen direkt energieübertragend verbunden ist und von dieser Vorrichtung Energie in Form von elektrischer oder mechanischer Energie auf die anderen Vorrichtungen übertragen wird.

Die Energieversorgungsvorrichtung kann ein Dieselaggregat oder ein Benzinaggregat sein. Alternativ kann die Energieversorgungsvorrichtung durch Batterien, durch eine Brennstoffzelle oder durch eine sonstige Energiequelle betrieben werden.

Die Presseinheit ist erfindungsgemäß als Baueinheit konzipiert und ist vorzugsweise als solche mobil ausgestaltet, so dass sie mit geringem Aufwand zu einem Einsatzort, beispielsweise einer Baustelle oder einer Abfallsammelstelle, transportierbar ist.

Die vorliegende Erfindung wird nachfolgend anhand eines bevorzugten Ausführungsbeispiels unter Bezugnahme auf die beigefügte Zeichnung erläutert. Es zeigt:

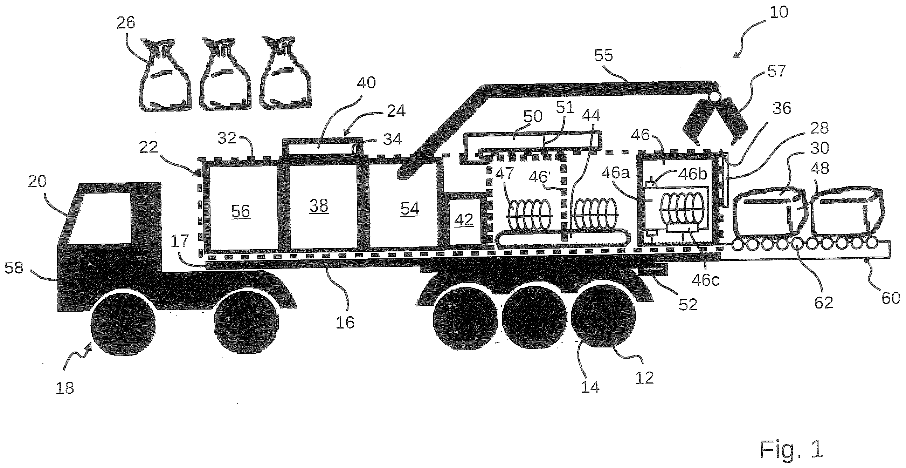

- Figur 1:: eine schematische Seitenansicht eines Fahrzeugs mit Presseinheit gemäß dem Ausführungsbeispiel der vorliegenden Erfindung.

Ein in Figur 1 allgemein mit 10 bezeichnetes Fahrzeug ist vorzugsweise als Teil eines Lastkraftwagens ausgebildet und umfasst dementsprechend ein eine Mehrzahl von Straßenrädern 12, welche drehbar an mindestens einer Achse 14 gehalten sind, sowie einen Karosserie-Längsträger 16 welcher sich in Längsrichtung des Fahrzeugs 10 erstreckt. Im Ausführungsbeispiel ist das Fahrzeug ein Sattelauflieger, welcher am vorderen Ende des Karosserie-Längsträgers 16 einen Aufliegerabschnitt 17 aufweist, an welchem er mit einem an sich bekannten Zugfahrzeug 18 mit Fahrerhaus 20 koppelbar ist.

Das Fahrzeug 10 umfasst erfindungsgemäß ferner eine Presseinheit 22 mit einem Eingabeabschnitt 24 zur Eingabe von unverpresstem Abfallmaterial 26 und einem Ausgabeabschnitt 28 zur Ausgabe von verpresstem Abfallmaterial in Form von umhüllten Ballenpaketen 30. Die Elemente der Presseinheit 22 sind in einem gemeinsamen Gehäuse 32 (angedeutet durch eine gestrichelte Linie) untergebracht, welches am Eingabeabschnitt 24 eine Eingabeöffnung 34, beispielsweise an einer Oberseite des Gehäuses 32, aufweist und am Ausgabeabschnitt 28 eine Ausgabeöffnung 36, beispielsweise an einem hinteren Ende des Gehäuses 32, aufweist.

Die Presseinheit 22 umfasst in dem Gehäuse 32 insbesondere eine Pressvorrichtung 38, welche als an sich bekannte Kanalballenpresse für ein kontinuierliches Verpressen von Abfallmaterial zu Ballen ausgestaltet sein kann. Die Pressvorrichtung 38 kann dementsprechend eine Vorpressklappe 40 an dem Eingabeabschnitt 24 umfassen, welche gleichzeitig die Eingabeöffnung 34 schließt und somit das Innere des Gehäuses 32 abdichtet und zudem durch den Klappendruck eine Vorkompression des Materials bereitstellt bzw. eine Kompressionsleistung in der Presskammer erhöht. Ferner kann die Pressvorrichtung 38 mindestens einen Druckzylinder, vorzugsweise zwei Druckzylinder, umfassen, durch welche ein Pressstempel zum eigentlichen Verpressen und Komprimieren des Abfallmaterials angetrieben wird. Werden zwei Druckzylinder verwendet, so kann nicht nur der Pressdruck erhöht werden, es ist auch eine Erhöhung der Vortriebsgeschwindigkeit und damit des Durchsatzes des zu verpressenden Abfallmaterials möglich.

An die Pressvorrichtung 38 ist vorzugsweise eine Abbindevorrichtung 42 angeschlossen, welche die gepressten Ballen empfängt und eine Mehrzahl der Ballen zu einem Ballenpaket 47 zusammenfasst. Dabei fixiert die Abbindevorrichtung 42 das Ballenpaket 47 vorzugsweise durch Umwicklung mit einem Garn oder einem Draht, sodass die Ballen des Ballenpakets 47 sich nicht voneinander lösen können und eine elastische Expansion nach dem Pressvorgang reduziert wird. Im Folgenden wird die weitere Aufbereitung des gepressten Abfallmaterials in Bezug auf Ballenpakete 47 beschrieben. Ballenpakete 47 können dabei eine Mehrzahl von Ballen enthalten (wie oben beschrieben) oder aber sie enthalten nur einen einzigen Ballen (insbesondere in Fällen, in denen die Pressvorrichtung keine Abbindevorrichtung 42 aufweist).

Nach dem Verpressen und ggf. Aufbereiten der Ballen werden diese durch eine Transportvorrichtung 44 weiter in eine Richtung von der Pressvorrichtung 38 hin zu einer Wickelvorrichtung 46 transportiert, welche dafür eingerichtet ist, das Ballenpaket 47 mit einer im Wesentlichen staubdichten Hülle 48 zu umwickeln. Hierbei wird insbesondere an die Verwendung einer Kunststofffolie 46a gedacht, die von einer Folienspendevorrichtung 46b, beispielsweise eine Folienrolle, zuführbar ist und mit welcher das Ballenpaket 47 mehrfach umwickelt wird. Zu diesem Zweck kann das Ballenpaket 47 auf einem Drehtisch 46c rotieren und dabei das Folienmaterial kontinuierlich abwickeln, bis das Ballenpaket 47 vollständig mit dem Folienmaterial umwickelt ist. Gegebenenfalls kann das Ballenpaket 47 zwischenzeitlich gewendet oder gekippt werden, um eine Wickelrichtung der Folie 46a zu ändern und auf diese Weise das Ballenpaket 47 allseitig vollständig zu umwickeln. Wickelvorrichtungen 46 dieser Art zum automatisierten und im Wesentlichen vollständigen Umwickeln eines Körpers mit einer Kunststofffolie sind an sich im Stand der Technik bekannt und der Fachmann kann hier ggf. eine aus dem Bereich des industriellen Verpackens von Waren bekannte Vorrichtung adaptieren und gemäß der Erfindung in die Presseinheit 22 integrieren.

Die Kunststofffolie 46a kann eine Klebstoffschicht tragen, so dass die Festigkeit der Hülle verbessert und ein unerwünschtes Lösen der Umwicklung vermieden werden kann.

Die Wickelvorrichtung 46 übergibt das Ballenpaket 47 mit der fertigen Hülle 48 dem Ausgabeabschnitt 28, aus welchem das Ballenpaket 47 schließlich das Gehäuse 32 wieder verlässt.

Das Gehäuse 32 verhindert im Wesentlichen einen Austritt von Abfallmaterial aus der Presseinheit 22 während des Verpressens, der Aufbereitung, des Transports oder der Umhüllung des Materials. Der Innenraum des Gehäuses 32 wird dabei durch eine Unterdruckhaltevorrichtung 50 kontinuierlich bei einem Unterdruck gehalten, sodass in dem Innenraum entstehende Stäube oder Dämpfe des Abfallmaterials kontinuierlich abgesaugt werden und an einem nachgeschalteten Filter 51 abgesondert und getrennt entsorgt werden können. Darüber hinaus kann im unteren Bereich der Presseinheit, insbesondere unterhalb der Pressvorrichtung und gegebenenfalls unterhalb weiterer Vorrichtungen ein Sammelbehälter 52 vorgesehen sein, welcher herabfallende Materialstücke des Abfallmaterials auffängt und eine gesonderte Entsorgung dieses Materials bzw. Rückführung in den Aufbereitungskreislauf erlaubt.

Zum Be- und Entladen der Presseinheit 22 kann das erfindungsgemäße Fahrzeug 10 ferner eine Ladevorrichtung, beispielsweise in Form eines Selbstladekrans 54 aufweisen. Im gezeigten Ausführungsbeispiel ist der Selbstladekran 54 in einem zentralen Abschnitt des Fahrzeugs zwischen Eingabeabschnitt 24 und Ausgabeabschnitt 28 vorgesehen, so dass ein Ausleger 55 des Selbstladekrans 54 durch entsprechende Schwenkbewegung sowohl den Eingabeabschnitt 24 mit unverpresstem Abfallmaterial 26 beladen kann als auch den Ausgabeabschnitt 28 mit verpresstem Abfallmaterial 30 entladen kann. Am freien Ende des Auslegers 55 kann ein Spezialgreifer 57 vorgesehen sein, welcher speziell dafür eingerichtet ist, sowohl unverpresstes Abfallmaterial 26 als auch verpresstes Abfallmaterial 30 beschädigungsfrei zu ergreifen und zu beladen beziehungsweise zu entladen.

Zur weiteren Verbesserung der Handhabung der Presseinheit kann der Ausgabeabschnitt 28 eine Abtransporteinrichtung 60 umfassen, welche an den Ausgabeabschnitt 28 anschließt und dafür eingerichtet ist, die an dem Ausgabeabschnitt 28 ausgegebenen, umhüllten Ballenpakete 30 für den Abtransport bereitzustellen. Insbesondere kann die Abtransporteinrichtung 60 mindestens ein Ballenpaket 30, vorzugsweise eine Mehrzahl von Ballenpaketen 30, auf einer Transportbahn, zum Beispiel einer Rollenbahn 62, zwischenspeichern, bis sie von dem Selbstladekran 54 ergriffen und auf ein neben dem Fahrzeug 10 befindliches Transportfahrzeug (nicht gezeigt) geladen werden.

Die für den Betrieb der Presseinheit 22 erforderliche Energie wird vorzugsweise durch eine gemeinsame Energieversorgungsvorrichtung 56 bereitgestellt. Die Energieversorgungsvorrichtung 56 kann ebenfalls in dem Gehäuse 32 untergebracht sein und somit Teil der Baueinheit der Presseinheit 22 sein. Das Zugfahrzeug 18 ist mit einer separaten Fahrzeugantriebseinrichtung 58 ausgestattet, welche Antriebsenergie für einen Fahrantrieb des Zugfahrzeugs 18 liefert, wohingegen die Energieversorgungsvorrichtung 56 Energie für die Presseinheit 22 liefert. Als Energieversorgungsvorrichtung 56 kommt beispielsweise ein Dieselaggregat in Frage, welches elektrische oder/und mechanische Energie (z.B. hydraulische Energie) zum Betreiben der einzelnen Vorrichtungen der Presseinheit 22 liefern kann.

Eine optimale Gewichtsverteilung der Presseinheit insbesondere in Längsrichtung des Fahrzeugs 10 kann durch geeignete Anordnung der jeweiligen Vorrichtungen erreicht werden. In einer in Figur 1 illustrierten Variante kann die Wickelvorrichtung 46 bewegbar sein zwischen einer durch gestrichelte Linien angedeuteten vorderen Transportposition 46', in welcher die Wickelvorrichtung 46 in Vorwärtsrichtung verschoben ist, und einer hinteren Arbeitsposition, in welcher die Wickelvorrichtung am hintersten Ende des Gehäuses 32 und vorzugsweise hinter der Achse 14 des Fahrzeugs 10 angeordnet ist. Die Wickelvorrichtung 46 kann hierfür in einer Linearführung in Fahrzeuglängsrichtung verschiebbar gehalten sein.

Anzumerken ist ferner, dass der Karosserie-Längsträger 16 den eigentlichen lasttragenden Abschnitt des Sattelaufliegers bildet, welcher Stütz- und Zugkräfte zwischen Zugfahrzeug 18 und Fahrzeug 10 überträgt beziehungsweise aufnimmt, und gleichzeitig aber auch ein tragendes Basisteil der Pressvorrichtung 38 oder/und der Wickelvorrichtung 46 oder/und anderer Vorrichtungen der Presseinheit 22 bildet. Insbesondere bildet der Karosserie-Längsträger vorzugsweise auch des tragende Basisteil für mindestens eine weitere, vorzugsweise alle, der folgenden Vorrichtungen: Energieversorgungsvorrichtung 56, Selbstladekran 54, Abbindevorrichtung 42, Transportvorrichtung 44, Unterdruckhaltevorrichtung 50. Insbesondere kann der Karosserie-Längsträger im Wesentlichen den gesamten Boden des Gehäuses 32 bilden oder/und das hauptsächliche verbindende und tragende Element der gesamten Presseinheit 22 sein. Die Doppelfunktion dieser Abschnitte erlaubt eine Reduzierung der Baugröße und des Gewichts des Fahrzeugs 10, insbesondere derart, dass das Gesamtgewicht des Fahrzeugzugs, das heißt das Gewicht des Fahrzeugs 10 plus das Gewicht des Zugfahrzeugs 18, kleiner oder gleich 40 Tonnen beträgt. Auf diese Weise kann das Fahrzeug 10 zum Beispiel mit Straßenzulassung gemäß zumindest deutscher Straßenverkehrsordnung und insbesondere ohne Notwendigkeit spezieller Transportfahrzeuge wie Tieflader oder Schwerlasttransporter etc. schnell und kostengünstig zu einem gewünschten Einsatzort gebracht werden.

Nachfolgend wird ein Betrieb des Fahrzeugs des Ausführungsbeispiels näher beschrieben. Während einer Fortbewegung des Fahrzeugs 10 ist der Selbstladekran 54 in einer Ruhestellung arretiert und die ggf. verschiebbar vorgesehene Wickelvorrichtung 56 ist in die Transportposition verschoben und dort arretiert. Die Ein- und Ausgabeöffnungen 34, 36 sind verschlossen und eine Bedienperson kann beispielsweise im Zugfahrzeug 18 sitzend das Fahrzeug 10 ziehen. Am Einsatzort kann die Bedienperson entweder durch eine Bedienung aus dem Fahrerhaus 20 heraus oder durch Bedienung an einem Bedienfeld des Selbstladekrans 54 direkt den Selbstladekran 54 bedienen, um unverpresstes Abfallmaterial 26, welches beispielsweise in Säcken bereitgestellt ist, zu ergreifen und an dem Eingabeabschnitt 24 in die Pressvorrichtung 38 einzugeben. Die Pressvorrichtung 38 verpresst die Säcke mit Abfallmaterial kontinuierlich zu einer Mehrzahl verpresster Ballen, welche anschließend gegebenenfalls von der Abbindevorrichtung 42 zu Ballenpaketen 47 zusammengefasst und fixiert werden. Die Transportvorrichtung 44 transportiert die Ballenpakete 47 zur Wickelvorrichtung 46, welche die Ballenpakete 47 mit der Kunststofffolie 46a umwickelt und anschließend am Ausgabeabschnitt 28 wieder bereitstellt. Die Bedienperson kann dann mit dem Selbstladekran 54 die fertig umhüllten Ballenpakete 30 ergreifen und beispielsweise auf einem bereitstehenden Transportfahrzeug (nicht dargestellt) abladen.

Insgesamt ist zu erkennen, dass im illustrierten Ausführungsbeispiel der gesamte Press- und Aufbereitungsvorgang ohne die Gefahr eines Kontakts des Abfallmaterials mit Mensch oder Umwelt stattfindet und gleichzeitig von nur einer Bedienperson gesteuert werden kann. Das eventuell gesundheits- oder umweltgefährdende Material wird in verschlossenen Säcken eingegeben und im Wesentlichen staubdicht umhüllt ausgegeben und ist zwischen diesen beiden Arbeitsschritten ständig im Inneren des im Wesentlichen geschlossenen Gehäuses 32 eingeschlossen. Die so geschaffene Presseinheit 22 ist daher nicht nur mobil und einfach zu bedienen sondern zudem besonders umwelt- und gesundheitsschonend.

Im illustrierten Ausführungsbeispiel ist das Fahrzeug 10 als Sattelauflieger zur Kopplung mit einem Zugfahrzeug 18 ausgestaltet. Ebenso denkbar ist jedoch eine Ausführungsform der Erfindung, in welcher das Fahrzeug ein Lastkraftwagen ist, in welchem die vorderen Achsen, die das Fahrerhaus und die Fahrzeugantriebseinrichtung tragen, und die hinteren Achsen des Lastkraftwagens durch den Karosserie-Längsträger unlösbar miteinander verbunden sind. Grundsätzlich ist dann auch denkbar, dass eine Energieversorgungsvorrichtung vorgesehen ist, welche Energie sowohl für den Betrieb der Presseinheit als auch für den Fahrantrieb des Fahrzeugs liefert.

Ferner ist anzumerken, dass im illustrierten Ausführungsbeispiel eine Wickelvorrichtung 46 als Hüllvorrichtung im Sinne der vorliegenden Erfindung zur Herstellung der im Wesentlichen staubdichten Hülle verwendet wurde. In einer Variante der Erfindung kann die Hüllvorrichtung stattdessen durch eine Verschweißvorrichtung gebildet sein, in welcher das Ballenpaket 47 einen Schlauch, insbesondere einen Schlauch aus einem Kunststofffolienmaterial, eingeschlossen wird. Hier kann ein Schrumpfschlauch verwendet werden, der nach dem Prinzip der Heißverpackung arbeitet, so dass zunächst das Ballenpaket mit dem Schrumpfschlauch umhüllt wird und anschließend der Schrumpfschlauch erhitzt wird. Beim Erhitzen schrumpft der Schlauch und schließt das Ballenpaket sicher und zur Umgebung hin abgedichtet ein. Alternativ oder zusätzlich können die beiden endseitigen Öffnungen nach dem Einbringen des verpressten Abfallmaterials durch Verschweißen oder in anderer Weise verschlossen werden.

## Patentansprüche

1. Fahrzeug (10), umfassend eine Presseinheit (22) zum Verpressen von Abfallmaterial, wobei die Presseinheit (22) umfasst:
• einen Eingabeabschnitt (24), an welchem unverpresstes Abfallmaterial (26) eingebbar ist,
• eine Pressvorrichtung (38) zum portionsweisen Komprimieren des eingegebenen Abfallmaterials in einzelne Ballen (47), und
• einen Ausgabeabschnitt (28), an welchem die Ballen ausgebbar sind,
wobei eine funktionsmäßig zwischen der Pressvorrichtung (38) und dem Ausgabeabschnitt (28) angeordnete Hüllvorrichtung (46), welche dafür eingerichtet ist, mindestens einen von der Pressvorrichtung (38) ausgegebenen Ballen (47) mit einer im Wesentlichen staubdichten Hülle (48) zu umkleiden, **dadurch gekennzeichnet, dass**
ein in Fahrzeuglängsrichtung verlaufendes, tragendes Karosserieelement (16) des Fahrzeugs (10), welches vorzugsweise einen Aufliegerabschnitt zur tragenden Verbindung mit einem Zugfahrzeug aufweist oder welches mindestens eine Achse (14) des Fahrzeugs mit einer vorderen Achse des Fahrzeugs verbindet, ein Presslast aufnehmendes Basisteil der Pressvorrichtung (38) oder/und
ein die Presseinheit (22) umfassend eine Energieversorgungsvorrichtung (56), die Pressvorrichtung (38), einen Selbstladekran (54), eine Abbindevorrichtung (42), eine Transportvorrichtung (44), die Hüllvorrichtung (46) und ein Gehäuse (32), zu einer Baueinheit verbindendes Trägerteil der Presseinheit (22) ausbildet.

2. Fahrzeug (10) nach Anspruch 1, **dadurch gekennzeichnet, dass** die Hüllvorrichtung (46) einen Folienzulauf (46b) zum Zuführen eines Folienmaterials (46a) und eine Wickeleinrichtung (46c) zum Umwickeln des mindestens einen Ballens (47) mit dem Folienmaterial (46a) umfasst.

3. Fahrzeug (10) nach Anspruch 1 oder Anspruch 2, **dadurch gekennzeichnet, dass** die Hüllvorrichtung (46) dafür eingerichtet ist, den mindestens einen Ballen (47) im Wesentlichen allseitig und vollständig mit der Hülle zu umkleiden.

4. Fahrzeug (10) nach einem der vorhergehenden Ansprüche, ferner **gekennzeichnet durch** die funktionsmäßig zwischen der Pressvorrichtung (38) und der Hüllvorrichtung (46) angeordnete Transportvorrichtung (44), welche dafür eingerichtet ist, mindestens einen Ballen (47) in einer Richtung von der Pressvorrichtung (38) zur Hüllvorrichtung (46) zu transportieren.

5. Fahrzeug (10) nach einem der vorhergehenden Ansprüche, ferner **gekennzeichnet durch** die funktionsmäßig zwischen der Pressvorrichtung (38) und der Hüllvorrichtung (46) angeordnete Abbindevorrichtung (42), welche dafür eingerichtet ist, eine Mehrzahl von komprimierten Ballen zusammenzufassen und der Hüllvorrichtung (46) als Ballenpaket (47) zuzuführen, und dass die Hüllvorrichtung (46) dafür eingerichtet ist, alle Ballen eines Ballenpakets (47) mit einer gemeinsamen Hülle (48) zu umkleiden.

6. Fahrzeug (10) nach einem der vorhergehenden Ansprüche, **dadurch gekennzeichnet, dass** die Pressvorrichtung (38), die Hüllvorrichtung (46), die Transportvorrichtung (44) oder/und die Abbindevorrichtung (42) in dem gemeinsamen Gehäuse (32) der Presseinheit (22) untergebracht sind, wobei das Gehäuse (32) eine Eingabeöffnung (34) aufweist, die zum Eingabeabschnitt (24) gehört, und eine Ausgabeöffnung (36) aufweist, die zum Ausgabeabschnitt (28) gehört.

7. Fahrzeug (10) nach einem der vorhergehenden Ansprüche, ferner **gekennzeichnet durch** eine Unterdruckhaltevorrichtung (50), welche dafür eingerichtet ist, durch die Presseinheit (22) erzeugten Staub abzuführen, insbesondere das gemeinsame Gehäuse (32) unter Unterdruck zu halten.

8. Fahrzeug (10) nach einem der vorhergehenden Ansprüche, ferner **gekennzeichnet durch** eine Sammelvorrichtung (52) der Presseinheit (22), welche dafür eingerichtet ist, während des Pressvorgangs herausgelöste und herabfallende Materialstücke aufzufangen.

9. Fahrzeug (10) nach einem der vorhergehenden Ansprüche, **dadurch gekennzeichnet, dass** die Ladevorrichtung (54) dafür eingerichtet ist, unverpresstes Abfallmaterial (26) aufzunehmen und dem Eingabeabschnitt (24) zuzuführen, oder/und dafür eingerichtet ist, mindestens einen an dem Ausgabeabschnitt (28) ausgegebenen Ballen (30) abzuführen.

10. Fahrzeug (10) nach einem der vorhergehenden Ansprüche, **dadurch gekennzeichnet, dass** die Energieversorgungsvorrichtung (56) dafür eingerichtet ist, zumindest die Pressvorrichtung (38) und die Hüllvorrichtung (46) mit Betriebsenergie zu versorgen.

11. Fahrzeug (10) nach einem der vorhergehenden Ansprüche, **dadurch gekennzeichnet dass** die Presseinheit (22) als Baueinheit mobil ist.

12. Fahrzeug (10) nach Anspruch 10 und Anspruch 11, **dadurch gekennzeichnet, dass** die Energieversorgungsvorrichtung (56) ein Dieselaggregat umfasst.

13. Fahrzeug (10) nach einem der vorhergehenden Ansprüche, **dadurch gekennzeichnet, dass** das Fahrzeug (10) als ein Sattelauflieger oder Lastkraftwagen ausgebildet ist.

14. Fahrzeugzug (10, 18) umfassend ein Fahrzeug (10) nach einem der Ansprüche 1 bis 13 sowie ein Zugfahrzeug (18), wobei das Zugfahrzeug (18) einen Fahrantrieb (58) sowie erste Kopplungsmittel zur Ankopplung zweiter Kopplungsmittel (17) des Fahrzeugs (10) aufweist, **dadurch gekennzeichnet, dass** der Fahrzeugzug (10, 18) ein Gesamtgewicht kleiner oder gleich 40 Tonnen aufweist.

## Claims

1. A vehicle (10) including a pressing unit (22) for pressing waste material,
wherein the pressing unit (22) includes:
• an input section (24), at which unpressed waste material (26) can be input,
• a pressing device (38) for compressing the input waste material in portions into individual bales (47), and
• an output section (28), at which the bales can be output, wherein an enveloping device (46) functionally arranged between the pressing device (38) and the output section (28), which is configured to coat at least one bale (47) output by the pressing device (38) with a substantially dust-proof envelope (48), **characterized in that**
a load-bearing body element (16) of the vehicle (10) extending in vehicle longitudinal direction, which preferably comprises a trailer section for load-bearing connection to a towing vehicle or which connects at least one axle (14) of the vehicle to a front axle of the vehicle, forms a base part of the pressing device (38) carrying a pressing load, and/or
a supporting part of the pressing unit (22) connecting the pressing unit (22) including an energy supply device (56), the pressing device (38), a self-loading crane (54), a binding device (42), a transport device (44), the enveloping device (46) and a housing (32) to a constructional unit.

2. The vehicle (10) according to claim 1, **characterized in that** the enveloping device (46) includes a foil intake (46b) for supplying a foil material (46a) and a wrapping device (46c) for wrapping the at least one bale (47) with the foil material (46a).

3. The vehicle (10) according to claim 1 or claim 2, **characterized in that** the enveloping device (46) is configured to coat the at least one bale (47) with the envelope substantially on all sides and in complete manner.

4. The vehicle (10) according to any one of the preceding claims, further **characterized by** the transport device (44) functionally arranged between the pressing device (38) and the enveloping device (46), which is configured to transport at least one bale (47) in a direction from the pressing device (38) to the enveloping device (46).

5. The vehicle (10) according to any one of the preceding claims, further **characterized by** the binding device (42) functionally arranged between the pressing device (38) and the enveloping device (46), which is configured to combine a plurality of compressed bales and supply them to the enveloping device (46) as a bale packet (47), and that the enveloping device (46) is configured to coat all of the bales of a bale packet (47) with a common envelope (48).

6. The vehicle (10) according to any one of the preceding claims, **characterized in that** the pressing device (38), the enveloping device (46), the transport device (44) and/or the binding device (42) are accommodated in the common housing (32) of the pressing unit (22), wherein the housing (32) comprises an input opening (34), which belongs to the input section (24), and comprises an output opening (36), which belongs to the output section (28).

7. The vehicle (10) according to any one of the preceding claims, further **characterized by** a negative pressure maintaining device (50), which is configured to discharge dust generated by the pressing unit (22), in particular to maintain the common housing (32) at negative pressure.

8. The vehicle (10) according to any one of the preceding claims, further **characterized by** a collecting device (52) of the pressing unit (22), which is configured to collect material pieces released and dropping during the pressing operation.

9. The vehicle (10) according to any one of the preceding claims, **characterized in that** the loading device (54) is configured to receive unpressed waste material (26) and to supply it to the input section (24), and/or is configured to discharge at least one bale (30) output at the output section (28).

10. The vehicle (10) according to any one of the preceding claims, **characterized in that** the energy supply device (56) is configured to supply at least the pressing device (38) and the enveloping device (46) with operating energy.

11. The vehicle (10) according to any one of the preceding claims, **characterized in that** the pressing unit (22) is mobile as a constructional unit.

12. The vehicle (10) according to claim 10 and claim 11, **characterized in that** the energy supply device (56) includes a diesel generator set.

13. The vehicle (10) according to any one of the preceding claims, **characterized in that** the vehicle (10) is formed as a semi-trailer or truck.

14. A vehicle combination (10, 18) including a vehicle (10) according to any one of claims 1 to 13 as well as a towing vehicle (18), wherein the towing vehicle (18) comprises a traction drive (58) as well as first coupling means for coupling second coupling means (17) of the vehicle (10), **characterized in that** the vehicle combination (10, 18) has a total weight of less than or equal to 40 tons.

## Revendications

1. Véhicule (10) incluant une unité de compression (22) pour compresser des matériaux de rebut, l'unité de compression (22) comprenant :
• une partie d'entrée (24) au niveau de laquelle des matériaux de rebut (26) non compressés peuvent être introduits,
• un dispositif de compression (38) pour comprimer, par portions, les matériaux de rebut introduits en balles individuelles (47), et
• une partie de sortie (28) au niveau de laquelle les balles peuvent être évacuées,
un dispositif d'enveloppement (46) agencé de manière fonctionnelle entre le dispositif de compression (38) et la partie de sortie (28) étant conçu pour envelopper au moins une balle (47) évacuée du dispositif de compression (38) avec une enveloppe (48) sensiblement étanche à la poussière,
**caractérisé en ce que**
un élément de carrosserie (16) porteur du véhicule (10) et s'étendant dans une direction longitudinale de véhicule, qui comporte de préférence une partie de remorque pour un attelage porteur avec un véhicule tracteur ou qui relie au moins un essieu (14) du véhicule avec un essieu avant du véhicule, une partie de base recevant une charge de compression du dispositif de compression (38) et/ou
l'unité de compression (22) comprenant un dispositif d'alimentation en énergie (56), le dispositif de compression (38), une grue d'auto-chargement (54), un dispositif de dételage (42), un dispositif de transport (44), le dispositif d'enveloppement (46) et un caisson (32), forme une partie porteuse de l'unité de compression (22) attelée comme une unité modulaire.

2. Véhicule (10) selon la revendication 1, **caractérisé en ce que** le dispositif d'enveloppement (46) comprend une alimentation en film (46b) pour amener un matériau en film (46a) et un dispositif d'enroulement (46c) pour entourer la au moins une balle (47) avec le matériau en film (46a).

3. Véhicule (10) selon la revendication 1 ou la revendication 2, **caractérisé en ce que** le dispositif d'enveloppement (46) est conçu pour entourer au moins une balle (47) avec l'enveloppe pratiquement de tous côtés et de façon complète.

4. Véhicule (10) selon l'une des revendications précédentes, **caractérisé en outre par** le dispositif de transport (44) agencé de manière fonctionnelle entre le dispositif de compression (38) et le dispositif d'enveloppement (46), lequel dispositif de transport est conçu pour transporter au moins une balle (47) dans une direction allant du dispositif de compression (38) jusqu'au dispositif d'enveloppement (46).

5. Véhicule (10) selon l'une des revendications précédentes, **caractérisé en outre par** le dispositif de dételage (42) agencé de manière fonctionnelle entre le dispositif de compression (38) et le dispositif d'enveloppement (46), lequel dispositif de dételage est conçu pour regrouper une pluralité de balles comprimées et pour les acheminer jusqu'au dispositif d'enveloppement (46) sous la forme d'un paquet de balles (47), et en ce que le dispositif d'enveloppement (46) est conçu pour entourer toutes les balles d'un paquet de balles (47) avec une enveloppe commune (48).

6. Véhicule (10) selon l'une des revendications précédentes, **caractérisé en ce que** le dispositif de compression (38), le dispositif d'enveloppement (46), le dispositif de transport (44) et/ou le dispositif de dételage (42) sont placés dans le caisson commun (32) de l'unité de compression (22), le caisson (32) comportant une ouverture d'entrée (34) qui fait partie de la partie de sortie (24) et une ouverture de sortie (36) qui fait partie de la partie de sortie (28).

7. Véhicule (10) selon l'une des revendications précédentes, **caractérisé en outre par** un dispositif de maintien sous dépression (50) qui est conçu pour évacuer la poussière générée par l'unité de compression (22), en particulier pour maintenir le caisson commun (32) sous dépression.

8. Véhicule (10) selon l'une des revendications précédentes, **caractérisé en outre par** un dispositif de collecte (52) de l'unité de compression (22) qui est conçu pour recueillir des morceaux de matériaux détachés et tombés pendant l'opération de compression.

9. Véhicule (10) selon l'une des revendications précédentes, **caractérisé en ce que** le dispositif de chargement (54) est conçu pour recevoir des matériaux de rebut (26) non compressés et pour les acheminer jusqu'à la partie d'entrée (24), et/ou est conçu pour emmener au moins une balle (30) évacuée au niveau de la partie de sortie (28).

10. Véhicule (10) selon l'une des revendications précédentes, **caractérisé en outre en ce que** le dispositif d'alimentation en énergie (56) est conçu pour alimenter au moins le dispositif de compression (38) et le dispositif d'enveloppement (46) en énergie de fonctionnement.

11. Véhicule (10) selon l'une des revendications précédentes, **caractérisé en ce que** l'unité de compression (22) est mobile comme une unité modulaire.

12. Véhicule (10) selon la revendication 10 et la revendication 11, **caractérisé en ce que** le dispositif d'alimentation en énergie (56) comprend un groupe électrogène diesel.

13. Véhicule (10) selon l'une des revendications précédentes **caractérisé en ce que** le véhicule (10) est formé comme un semi-remorque ou un camion.

14. Ensemble de véhicule (10, 18) comprenant un véhicule (10) selon l'une des revendications 1 à 13 ainsi qu'un véhicule tracteur (18), le véhicule tracteur (18) comportant un système d'entraînement (58) ainsi que des premiers moyens d'attelage pour atteler des seconds moyens d'attelage (17) du véhicule (10), **caractérisé en ce que** l'ensemble de véhicule (10, 18) a un poids total inférieur ou égal à 40 tonnes.
